# EUROPEAN PATENT SPECIFICATION

(11) **EP 1 945 700 B1**
(45) Date of publication and mention of the grant of the patent: **17.02.2016**
(21) Application number: 06806362.7
(22) Date of filing: 18.10.2006
(51) Int. Cl.: C08K 3/04, C08L 25/04, C08K 3/30, C08K 3/34, C08J 9/00, C08J 9/16

(54) **EXPANDABLE GRANULATES BASED ON VINYLAROMATIC POLYMERS HAVING AN IMPROVED EXPANDABILITY AND PROCESS FOR THE PREPARATION THEREOF**
EXPANDIERBARE GRANULATE AUS STYROLPOLYMEREN MIT VERBESSERTER EXPANDIERBARKEIT UND VERFAHREN ZU DEREN HERSTELLUNG
GRANULÉS EXPANSIBLES À BASE DE POLYMÈRES VINYLIQUES AROMATIQUES AYANT UNE MEILLEURE EXPANSIBILITÉ ET PROCÉDÉ POUR LA PRÉPARATION DE CEUX-CI

(30) Priority: 18.10.2005 IT MI20051963
(43) Date of publication of application: 23.07.2008
(73) Proprietor: versalis S.p.A., 20097 San Donato Milanese (MI) (IT)
(72) Inventor: FELISARI, Riccardo, I-46030 S. Giorgio di Mantova (IT); GHIDONI, Dario, I-46023 Gonzaga (Mantova) (IT); PONTICIELLO, Antonio, I-37060 Mozzecane (IT); CASALINI, Alessandro, I-46100 Mantova (IT)
(74) Representative: Mauro, Marina Eliana
(86) International application number: PCT/EP2006/010045
(87) International publication number: WO 2007/045454

(56) References cited:
- EP-A- 0 372 343
- EP-A- 0 969 037
- WO-A-94/13721
- US-A- 3 301 812
- US-A- 3 536 787
- US-B1- 6 340 713

## Description

The present invention relates to expandable granulates, based on vinyl-aromatic polymers, having an improved expandability, and to the relative process for the preparation thereof.

More specifically, the present invention relates to compositions based on expandable polystyrene granulates (EPS) with an improved expandability, having enhanced thermal insulation properties and to the relative preparation-process.

Vinyl, aromatic polymers, and among these, in particular, polystyrene, are known products which have been used for a long time for preparing compact and/or expanded articles which can be adopted in various applicative fields, among which the most important are household appliances, the building industry, office machines, etc. A particular interesting sector is the field of thermal insulation where vinyl-aromatic polymers are essentially used in expanded form.

These expanded products are obtained by swelling in a pre-expander beads of expandable polymer previously impregnated with an expanding agent and moulding the swollen, particles contained inside a closed mould by means of the contemporaneous effect of pressure and temperature. The swelling of the particles is generally effected with vapour, or another gas, maintained at a temperature slightly higher than the glass transition temperature (Tg) of the polymer.

It is known that the expanding capacity of vinyl-aromatic polymers such as EPS can be improved by incorporating suitable additives. According to European patent 217.516, for example, the expandability of vinyl-aromatic polymers can be improved by adding plasticizers such as rubbers and oils to the polymer. The additives contained in resins do in fact plead to a good, immediate expandability but, as they keep inside in the polymeric matrix, they cause the expanded product to collapse with a consequent deterioration in the density.

The use of oligomers of aliphatic olefins, as described in the US patent 5,783,612, also improves the expandability of polystyrene but reduces the processability range.

It has also been verified that the reduction in the molecular weight of the polymer to values lower than 50,000 also implies an excellent expandability, but to the detriment of the processability and mechanical characteristics of the end-product.

In any case, whether the EPS be produced in the presence of expandability improver additives or without these, it is necessary for a quantity of expanding agent to be added, generally an aliphatic or cyclo-aliphatic hydrocarbon, which, in order to reach required densities, preferably ranges from 6 to 8%.

According to international patent application WO 03/53651, EPS granulates can be prepared by means of a continuous mass process which comprises:
i) melting the polymer in a single- or multi-screw extruder;
ii) incorporating an expanding agent in the polymer in the molten state;
iii) granulating the polymer thus obtained in a device which comprises a die, a cutting chamber and a cutting system; and
iv) re-annealing the annealed granules at room temperature and for a time of at least 30 prime minutes.

According to this application it is necessary to re-anneal the granules to have a good cellular structure of the expanded beads and therefore a good expandability.

Document US-A-6 340 613 describes expandable particles of styrene polymer containing 2 to 8% by weight of homogeneously distributed graphite particles, a blowing agent and an organic bromine compound as fire retardant. The graphite particles are characterised by a mean particle size of 1 to 50 microns and a specific surface area of from 5 to 20m2 /g. The polystyrene particles are prepared by mixing the graphite particles with a melt of the styrene polymer and the blowing agent. The polystyrene melt containing the graphite particles and the blowing agent is then extruded and granulated to form granules.

Document EP-A-372 343 describes thermoplastic resin foams containing a thermoplastic synthetic resin (I) and 1 to 0-25wt.% of a carbon black characterised by a particle size of from 10 to 100 nm and a surface area of from 10 to 1500 m2 /g wherein at least 60 wt.% of (I) is a polymerised alkenyl aromatic resin. The expanded polystyrene granulates may also contain up to 0.2% by weight of talc, up to 0.1 % by weight of magnesium oxide, up to 2.0% by weight of polyethylene as nucleating agent, up to 2.0% by weight of hexabromodecane as a fire retardant additive and 0.5 to 1.5% by weight of carbon dioxide as expanding agent.

Document WO-A-94/13721 relates to a method of insulating a surface, consisting of applying a polymeric foam structure containing 1 to 25% by weight based on the weight of the polymer material of carbon black particles dispersed in the polymeric foam. The carbon black is a thermal carbon black with a particle size greater than 150 nm. The polymer preferably contains at least 95% by weight of polystyrene having a weight average molecular weight of 195,000. The carbon black is admixed with a polymer resin melt together with a blowing agent during preparation of the expanded beads. The polystyrene mixture may also contain 0.3 phr of low density polyethylene as nucleating agent, 0.25 phr of talc and 0.04 magnesium oxide.

An objective of the present invention is to provide an expandable granulate based on vinyl-aromatic polymers having an improved expandability and which can be processed with the technologies and operating conditions analogous to those of equivalent products available on the market.

A further objective of the present invention is also to provide a continuous mass process for the production of expandable granulates based on' vinyl-aromatic polymers which overcomes the drawback of the necessarily long annealing time, typical of continuous mass processes.

Yet another objective of the present invention is to provide a continuous mass process for the production of expandable granulates based on vinyl-aromatic polymers which allows to obtain a polymer containing expandability additives which do not negatively influence the physical and mechanic properties of the expanded end-product and which also allows expanding agents to be used in a reduced quantity with respect to the traditional expandable vinyl-aromatic polymers.

The Applicant has now found that these and other objectives, which will appear evident from the following description, can be obtained through expandable granulates with compositions based on vinyl-aromatic polymers preferably having a weight average molecular weight Mw ranging from 50,000 to 300, 000 and essentially consisting of:
a) 65-99.8% by weight of a copolymer obtained by polymerizing 85-100% by weight of one or more vinyl-aromatic monomers having general formula (I) and 0-15% by weight of an α-alkylstyrene in which the alkyl group contains from 1 to 4 carbon atoms;
b) 0,01-20% by weight, calculated with respect to the polymer (a), of a carbon black having an average diameter ranging from 10 to 1000 nm and a surface area ranging from 5 to 200 m²/g;
(c1) 0.01-5% by weight, calculated with respect to the polymer (a), of graphite selected from naturel or synthetic graphite having an average diameter ranging from 0.5 to 50 µm and a specific area of 5-20 m²/g, or expandable graphite; and at least one of the following additives (c2)-(c3)
(c2) 0.01-5% by weight, calculated with respect to the polymer (a), of oxides and/or sulfates and/or lamellar dichalcogenides of metals of groups IIA, IIIA, IIB, IVB, VIB or VIIIB,
(c3) 0.01-5% by weight, calculated with respect to the polymer (a), of inorganic derivatives of silicon of the lamellar type;
d) 0,01-4,5% by weight, calculated with respect to the polymer (a), of a nucleating agent; and
e) 1-6% by weight, calculated with respect to 100 parts of the total of (a)-(d), of one or more expanding agents.

The term "expandable granulate", as used in the present description and claims, refers to a granule of an essentially polymeric nature produced by drawing of the polymer in the molten state, to which the additives (b)-(d) have been pre-added before the feeding to the extruder or after melting. Consequently essentially spherical beads, produced by suspension are excluded.

According to the present invention, the vinyl-aromatic polymer preferably has a weight average molecular weight ranging from 70,000 to 200,000 and can be obtained by polymerizing at least one vinyl-aromatic monomer which corresponds to the following general formula: 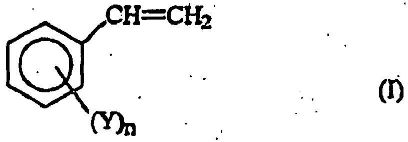 wherein n is zero or an integer ranging from 1 to 5 and Y is a halogen, such as chlorine or bromine, or an alkyl or alkoxyl radical having from 1 to 4 carbon atoms.

Examples of vinyl-aromatic monomers having the general formula defined above are: styrene, methylstyrene, ethylstyrene, butylstyrene, dimethylstyrene, mono-, di-, tri-, tetra- and penta-chlorostyrene, bromo-styrene, methoxystyrene, acetoxy-styrene, etc. Styrene is the preferred vinyl-aromatic monomer.

The term "vinyl-aromatic monomer", according to the present invention, also implies that the vinyl-aromatic monomers having general formula (I) can be used alone or in a mixture of up to 50% by weight with other copolymerizable monomers. Examples of these monomers are (meth)acrylic acid, C₁-C₄ alkyl esters of (meth)acrylic acid, such as methyl acrylate, methylmethacrylate, ethyl acrylate, ethylmethacrylate, isopropyl acrylate, butyl acrylate, amides and nitriles of (meth)acrylic acid such as acrylamide, methacrylamide, acrylonitrile, methacrylonitrile, butadiene, ethylene, divinylbenzene, maleic anhydride, etc. Preferred copolymerizable monomers are acrylonitrile and methylmethacrylate.

The vinyl-aromatic monomers, and possible other copolymerizable monomers, are also copolymerized with an α-alkylstyrene in quantities preferably ranging from 2 to 10%, to give the copolymer (a). The preferred α-alkylstyrene according to the present invention is α-methylstyrene, α-ethylstyrene or α-propylstyrene. α-methylstyrene is particularly preferred.

Any expanding agent capable of being incorporated in a polymeric matrix can be used in a combination with the vinyl-aromatic polymers used for producing the expandable granulates, object of the present invention. In general, liquid substances can be used, with a boiling point ranging from 10 to 100°C, preferably from 20 to 80°C. Typical examples are aliphatic or cyclo-aliphatic hydrocarbons containing from 3 to 6 carbon atoms such as n-pentane, isopentane, cyclopentane or their mixtures; halogenated derivates of aliphatic hydrocarbons containing from 1 to 3 carbon atoms such as, for example, dichlorodifluoromethane, 1,2,2-trifluoroethane, 1,1,2-trifluroethane; carbon dioxide and water. In order to promote the retention of the expanding agent in the polymeric matrix, additives capable of forming bonds of both the weak type (for example hydrogen bridges) and strong type (for example acid-base adducts) can be used with the expanding agent. Examples of these additives are methyl alcohol, isopropyl alcohol, dioctylphthalate, dimethyl carbonate, derivatives containing an amine group.

The carbon black filler has an average diameter ranging from 10 to 1000 nm, preferably from 100 to 1000, a specific surface ranging from 5 to 200 m²/g, preferably from 10 to 100 m²/g, (measured according to ASTM D-6556), a sulfur content ranging from 0.1 to 2000 ppm, preferably from 1 to 500 ppm, an ash residue ranging from 0.001 to 1%, preferably from 0.01 to 0.3% (measured according to ASTM D-1506), a loss with heat (measured according to ASTM D-1509) ranging from 0.001 to 1%, preferably from 0.01 to 0.5%, a DBPA .(measured according to ASTM D-2414) of 5-100 ml/ 100 g), preferably 20-80 ml/(100 g) and an iodine number (measured according to ASTM D-1510) ranging from 0.01 to 20 g/kg, preferably from 0.1 to 10 g/kg.

The carbon black filler can be added to the vinyl-aromatic polymer in such quantities as to give a final concentration in the polymer of 0.01 to 20% by weight, even more preferably from 0.1 to 5%.

The carbon black used in the present invention can be prepared according to the following main technologies:
- furnace process (partial combustion of a liquid containing aromatic hydrocarbons);
- thermal black process (method based on the decomposition of natural gas or liquid hydrocarbons in the absence of air or flame);
- acetylene black process (thermal decomposition process, 800-1000°C, at atmospheric pressure);
- lampblack process (combustion of various liquids or raw materials in the absence of air).

Greater details can be found, for example, in the Kirk-Othmer encyclopaedia, edition 4, volume 4.

The natural or synthetic graphite can have a size ranging from 0.5 to 50 µm, preferably from 1 to 13 µm, with a specific area of 5-20 m²/g. An example is the product UF 2 of Kropfmuhl having a diameter of 4.5 µm. The graphite can also be of the expandable type.

The oxides and/or sulfates and/or lamellar dichalcogenides of metals of groups IIA, IIIA, IIB, IVB, VIB or VIIIB are preferably those of Ca, Mg, Ba, for the group IIA, those of aluminum, for the group IIIA, those of Fe, for the group VIIIB, those of Mo, for the group VIB, and those of zinc and titanium for the group IIB and IVB respectively. The dichalcogenides are preferably those of sulfur, selenium or tellurium.

The inorganic silicon derivative is a product of the clay family, such as kaolinite and talc, micas, clays and montmorillonites, with a size ranging from 0.5 to 50 µm. The silicon derivative is preferably talc. An example is the product Minstron R10 of Luzenac with a size of 3.4 µm.

The nucleating agent is selected from polyethylene, polyamide waxes, having a molecular weight ranging from 500 to 10,000 or from S-B, S-B-S, SIS, SEBS, SEP block copolymers both of the linear and branched type, wherein: S = Styrene; B = Butadiene; I = Isoprene; E = Ethylene; P = Propylene. The concentration ranges from 0.01 to 4.5% by weight.

At the end of the addition of the expanding agent and other additives, a polymeric composition is obtained which can be transformed to produce expanded articles having a density ranging from 5 to 50 g/l, preferably from 8 to 25 g/l, obtained after expansion, at a temperature slightly higher than the glass transition temperature of the polymer and for the necessary times, of the expandable granulates object of the present invention.

These materials also have a certain thermal insulation capacity expressed by a thermal conductivity ranging from 27 to 50 mW/mK, measured at 10°C according to ISO 8301, preferably from 30 to 45 mW/mK, which is generally lower than that of equivalent non-filled expanded materials currently on the market, for example EXTIR A-5000 of Polimeri Europa S.p.A.

Conventional additives, generally used with commercial materials, such as pigments, stabilizers, flame-retardants, mineral fillers, refracting and/or reflecting additives such as titanium dioxide, antistatic agents, detaching agents, anti-shock agents, etc., can be added to the expandable granulates of vinyl-aromatic polymers, object of the present invention. In particular, among the additives, flame-retardant agents are preferred in a quantity ranging from 0.1 to 8% by weight, with respect to the weight of the resulting polymeric composition. Flame-retardant agents particularly suitable for the expandable granulates, based on vinyl-aromatic polymers, object of the present invention, are aliphatic, cyclo-aliphatic, brominated aromatic compounds such as hexabromocyclododecane, pentabromo-monochlorocyclohexane and pentabromophenyl allyl ether.

A further object of the present invention relates to a process for the continuous mass preparation of expandable granulates, based on vinyl-aromatic polymers, which consists in the following steps in series:
i) mixing a vinyl-aromatic polymer in the form of granules or already in the molten state, obtained by polymerizing 85-100% by weight of one or more vinyl-aromatic monomers having general formula (I) and 0.15% by weight of an α-alkylstyrene wherein the alkyl group contains from 1 to 4 carbon atoms, with the additives (b)-(d) indicated above;
ii) incorporating one or more expanding agents in the polymeric composition brought to the molten state;
iii) granulating the composition thus obtained in a device which comprises a die, a cutting chamber and a cutting system.

According to the present invention, step (i) can be carried out by feeding the polymeric granulate already formed, optionally mixed with processing waste products, and the additives (b)-(d), into an extruder. The single components are mixed herein, the polymeric part is subsequently melted and the expanding agent is then added.

Alternatively, the polymer can be used in the molten state coming directly from the polymerization plant (in solution), in particular from the devolatilization unit. The molten polymer is fed to suitable devices, for example an extruder or static mixer, where it is mixed with the additives and then with the expanding agent and is subsequently extruded to give the expandable granulate, object of the present invention.

The vinyl-aromatic polymer according to the present invention can consist of a copolymer containing from 50 to 100% by weight of a vinyl-aromatic polymer and 0-15% by weight of an α-alkylstyrene in which the alkyl group contains from 1 to 4 carbon atoms, the possible complement to 100 consisting of one or more copolymerizable monomers selected from those indicated above. Alternatively, the vinyl-aromatic polymer can consist of a mixture of two (co)polymers, the first consisting of 50-100% by weight of vinyl-aromatic monomer and 0-50% by weight of copolymerizable monomer and the second of a vinyl-aromatic monomer-α-alkylstyrene monomer copolymer, in such a ratio as to give a final concentration of α-alkylstyrene preferably equal to 2-10% by weight. Even if not necessary, the granules of the polymeric composition can optionally be re-annealed at a temperature lower than or equal to the glass transition temperature (Tg) or slightly higher, for example the Tg in-creased by up to 8°C, optionally under pressure.

Details on the continuous mass preparation of polymers and vinyl-aromatic compositions according to the present invention can be found in international patent application WO 03/53651.

The granulates obtained with the process, object of the present invention, are not necessarily subjected to re-annealing but are subjected to pre-treatment generally applied to the traditional expandable materials and which essentially consists of:
1. covering the granulates with an antistatic liquid agent such as amines, tertiary ethoxylated alkylamines, ethylene oxide-propylene oxide copolymers, sorbitol esters, glycerin, etc. This agent is essentially used for adhesion of the coating and for reducing the staticity;
2. applying the coating to said granulates, said coating essentially consisting of a mixture of mono-, di- and triesters of glycerin (or other alcohols) with fatty acids and of metallic stearates such as zinc and/or magnesium stearates.

Some illustrative but non-limiting examples are provided for a better understanding of the present invention and for its embodiment.

### EXAMPLE 1

The following products are fed into an extruder, directly from the devolatilization section of the polymerization plant: 95.1 parts of molten polystyrene Edistir N1782 having an MFI, measured at 200°C/5 kg of 8 g/10', having a Mw of 180,000, 4 parts of carbon black T990 (witch an average diameter of 362 nm, BET of 10 m²/g) of Cancarb of Houston, 0.5 parts of graphite, also adding 0.4% of SIS Europrene SOLT 9326 having 31.3% of PS and 68.7% of PB+PI rubber, sold by the company Polimeri Europa.

After bringing the polystyrene to 200°C, 4% of a mixture of n/i-pentane 80/20 is injected, as expanding agent, through a specific line.

The polymer containing the expanding agent is extruded through the holes of the die, cut with knives, dried, then 200 ppm of glycerin are added and the mixture is lubricated with 0.1% by weight of magnesium stearate and 0.3% by weight of glycerylmonostearate.

The granules are then by steam expanded at 3 and 7 minutes, and the density is evaluated the following day to guarantee a correct drying. The expandability result is indicated in the table below.

### EXAMPLE 2

Example 1 is repeated by feeding 95.35 parts of molten polystyrene N1782, 4 parts of carbon black T990, 0.25 parts of graphite and also adding 0.4% of SIS.

4% of a mixture of n/i-pentane 80/20 is fed to the extruder as expanding agent. The expandability result is indicated in the table below.

### COMPARATIVE EXAMPLE 1

Example 1 is repeated but without adding graphite.

As can be seen from the table below, the product expands only a little.

### COMPARATIVE EXAMPLE 2

Comparative example 1 is repeated but re-annealing the granules at a temperature 5°C higher than the Tg.

As can be seen from the table below, the re-annealing improves the expandability without reaching the value of Example 1.

### COMPARATIVE EXAMPLE 3

Comparative example 1 is repeated but feeding 6% of a mixture of n/i-pentane 80/20 and re-annealing the granules at a temperature 5°C higher than the Tg.

As can be seen from the table below, the product expands as in Example 1 but having 6% of pentane.

### COMPARATIVE EXAMPLE 4

Comparative Example 2 is repeated but excluding the carbon black.

As can be seen from the table below, the product expands only a little.

### EXAMPLE 3

Example 1 is repeated, feeding to the extruder 94.6 parts of molten polystyrene N1782, 4 parts of carbon black T990, 1 part of graphite and also adding 0.4% of SIS.

4% of a mixture of n/i-pentane 80/20 is also fed to the extruder as expanding agent. The expandability result is indicated in the table below.

### EXAMPLE 4

Example 1 is repeated but substituting the SIS with 0.4% of polyethylene wax having a molecular weight of 1000 (such as Polywax 1000 of Clariant). The expandability result is indicated in the table bellow.

### EXAMPLE 5

Example 1 is repeated but substituting the polystyrene Edistir N1782 with a copolymer having 4% by weight of alpha-methylstyrene and with an MFI of 20 g/10' measured at 200°C/5 kg. The expandability result is indicated in the table below: the density reaches 13 g/l after 7 minutes.

### EXAMPLE 6

The following products are fed to an extruder: 93.9 parts of molten polystyrene Edistir N1782, 4 parts of carbon black T990, 0.5 parts of graphite, 1.2 parts of stabilized hexabromocyclododecane (EBCD), sold by Great Lakes as BRE 5300, 0.4 parts of diphenylbutane, and also adding 0.4% of SIS Europtene SOLT 9326.

After mixing the additives, 4% of a mixture of n/ipentane 80/20 is fed to the extruder, as expanding agent, through a specific injection line.

The polymer containing the expanding agent is extruded through the holes of the die, cut with knives, dried, 200 ppm of glycerin are added and the mixture is lubricated with 0.1% by weight of metallic stearates and 0.3% by weight of glycerylmonostearate.

The granules are then expanded and moulded to obtain test samples for the fire test according to the regulation DIN 4102. The test is carried out after conditioning in an oven: the product passes the test B2.

### EXAMPLE 7

Example 1 is repeated feeding to the extrude: 99.2 parts of molten polystyrene N1782 and 0.8 parts of Minstron R10 talc produced by Luzenac with a size of 3.4 µm.

4% of a mixture of n/i-pentane 80/20 is fed to the extruder, as expanding agent. The expandability result is indicated in the table below.

**TABLE**

| | Vaporization time (min) | Density after 24 hrs (g/l) |
|---|---|---|
| EXAMPLE 1 | 3 | 15.5 |
| EXAMPLE 1 | 7 | 17 |
| EXAMPLE 2 | 3 | 16 |
| EXAMPLE 3 | 3 | 14.5 |
| EXAMPLE 4 | 3 | 16.1 |
| EXAMPLE 5 | 3 | 15.7 |
| EXAMPLE 5 | 7 | 13 |
| EXAMPLE 7 | 3 | 14.8 |
| COMPARATIVE 1 | 3 | 20 |
| COMPARATIVE 2 | 3 | 18 |
| COMPARATIVE 3 | 3 | 15.6 |
| COMPARATIVE 4 | 3 | 27 |

## Claims

1. Expandable granulates, having compositions based on vinyl-aromatic polymers, essentially consisting of:
a) 65-99.8% by weight of a copolymer obtained by polymerizing 85-100% by weight of one or more vinyl-aromatic monomers having general formula (I) and 0-15% by weight of an α-alkylstyrene in which the alkyl group contains from 1 to 4 carbon atoms;
b) 0.01-20% by weight, calculated with respect to the polymer (a), of a carbon black having an average diameter ranging from 10 to 1000 nm and a surface area ranging from 5 to 200 m²/g;
c1) 0.01-5% by weight, calculated with respect to the polymer (a), of graphite selected from natural or synthetic graphite having an average diameter ranging from 0.5 to 50 µm and a specific area of 5-20 m²/g, or expandable graphite;
and at least one of the following additives (c2) - (c3):
c2) 0.01-5% by weight, calculated with respect to the polymer (a), of oxides and/or sulfates and/or lamellar dichalcogenides of metals of groups IIA, IIIA, IIB, IVB, VIB or VIIIB,
c3) 0.01-5% by weight, calculated with respect to the polymer (a), of inorganic derivatives of silicon of the lamellar type;
d) 0.01-4.5% by weight, calculated with respect to the polymer (a), of a nucleating agent; and
e) 1-6% by weight, calculated with respect to .100 parts of the total of (a)-(d), of one or more expanding agents;
wherein Formula (I) is 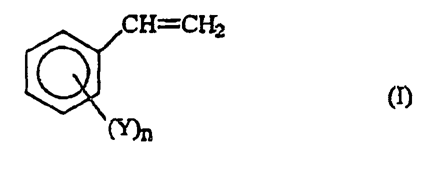 wherein n is zero or an integer ranging from 1 to 5 and Y is a halogen, such as chlorine or bromine, or an alkyl or alkoxyl radical having from 1 to 4 carbon atoms.

2. The expandable granulates of vinyl-aromatic polymers according to claim 1, having a weight average molecular weight Mw ranging from 50,000 to 300,000.

3. The expandable granulates of vinyl-aromatic polymers according to claim 1 or 2, wherein the alkylstyrene is present in a quantity ranging from 2 to 10% by weight.

4. The expandable granulates of vinyl-aromatic polymers according to claim 1, 2 or 3, wherein the alkylstyrene is α-methylstyrene.

5. The expandable granulates of vinyl-aromatic polymers according to any of the previous claims, wherein the carbon black has an average diameter ranging from 10 to 1000 nm, a specific surface ranging from 5 to 200 m²/g, a sulfur content ranging from 0.1 to 2000 ppm, an ash residue ranging from 0.001 to 1%, a loss with heat ranging from 0.001 to 1%, a DBPA of 5-100 ml/(100 g), and an iodine number ranging from 0.01 to 20 g/kg.

6. The expandable granulates of vinyl-aromatic polymers according to any of the previous claims, wherein the oxides and/or sulfates and/or lamellar dichalcogenides of metals of groups IIA, IIIA, IIB, IVB, VIB or VIIIB are those of Ca, Mg, Ba, for the group IIA, those of aluminum, for the group IIIA, those of Fe, for the group VIIIB, those of Mo, for the group VIB, and those of zinc and titanium for the group IIB and IVB respectively and wherein the lamellar dichalcogenides are those of sulfur, selenium or tellurium.

7. The expandable granulates of vinyl-aromatic polymers according to any of the previous claims, wherein the inorganic derivative of silicon is a product of the group of clays, micas, clays and montmorillonites with an average size ranging from 0.5 to 50 µm.

8. The expandable granulates of vinyl-aromatic polymers according to any of the previous claims, wherein the nucleating agent is selected from polyethylene, polyamide waxes having a molecular weight ranging from 500 to 10,000 or from S-B, S-B-S, SIS, SEBS, SEP block copolymers of both the linear and branched type.

9. The expandable granulates of vinyl-aromatic polymers according to any of the previous claims, comprising flame-retardant agents in a quantity ranging from 0.1 to 8% by weight, with respect to the total weight of the resulting polymeric composition.

10. Expanded articles having a density ranging from 5 to 50 g/l, having a thermal conductivity ranging from 27 to 50 mW/mK obtained after expansion, at a temperature slightly higher than the glass transition temperature of the polymer, of the expandable granulates of vinyl-aromatic polymers according to any of the previous claims.

11. A process for the continuous mass preparation of expandable granulates of vinyl-aromatic polymers which comprises the following steps in series:
i) mixing a vinyl-aromatic polymer in the form of granules or already in the molten state, obtained by polymerizing 85-100% by weight of one or more vinyl-aromatic monomers having general formula (I) and 0-15% by weight of an α-alkylstyrene wherein the alkyl group contains from 1 to 4 carbon atoms, with the additives (b)-(d) of claim 1 in the quantities indicated above;
ii) incorporating one or more expanding agents in the polymeric composition brought to the molten state;
iii) granulating the composition thus obtained in a device which comprises a die, a cutting chamber and a cutting system.

12. The process according to claim 11, wherein the expandable granulates are re-annealed at a temperature lower than or equal to the glass transition temperature (Tg), or slightly higher than the Tg, optionally under pressure.

13. The process according to claim 11 or 12, wherein the vinyl-aromatic polymer comprises 2-10% by weight of α-alkylstyrene monomer.

14. The process according to claim 13, wherein the vinyl-aromatic polymer consists of a mixture of two (co)polymers, the first consisting of 50-100% by weight of vinyl-aromatic monomer and 0-50% by weight of copolymerizable monomer and the second of a vinyl-aromatic monomer-α-alkylstyrene monomer copolymer, in such a ratio as to give a final concentration of α-alkylstyrene equal to 2-10% by weight.

15. The process according to any of the previous claims from 11 to 14, wherein the vinyl-aromatic polymer already in the molten state comes from the devolatilization step of a polymerization plant.

16. The process according to any of the previous claims from 11 to 14, wherein the vinyl-aromatic polymer already in the molten state comes from a pre-melting step of already formed polymeric granules, possibly already mixed with processing waste products and/or with the additives (b)-(d) of claim 1 in the quantities indicated above.

## Patentansprüche

1. Expandierbare Granulate mit Zusammensetzungen auf der Basis von vinylaromatischen Polymeren, welche im Wesentlichen aus Folgendem bestehen:
a) zu 65-99,8 Gew.-% aus einem Copolymer, erhalten durch Polymerisieren von 85-100 Gew.-% aus einem oder mehreren vinylaromatischen Monomeren mit der allgemeinen Formel (I) und 0-15 Gew.-% aus einem α-Alkylstyrol, wobei die Alkylgruppe von 1 bis 4 Kohlenstoffatome enthält;
b) zu 0,01-20 Gew.-%, berechnet mit Bezug auf das Polymer (a), aus einem Carbon Black mit einem mittleren Durchmesser im Bereich von 10 bis 1000 nm und einem Oberflächenbereich im Bereich von 5 bis 200 m²/g;
c1) zu 0,01-5 Gew.-%, berechnet mit Bezug auf das Polymer (a), aus Graphit, ausgewählt aus natürlichem oder synthetischem Graphit, mit einem mittleren Durchmesser im Bereich von 0,5 bis 50 µm und einer spezifischen Fläche von 5-20 m²/g, oder aus expandierbarem Graphit;
und mindestens einem der folgenden Zusatzstoffe (c2)-(c3):
c2) zu 0,01-5 Gew.-%, berechnet mit Bezug auf das Polymer (a), aus Oxiden und/oder Sulfaten und/oder lamellaren Dichalkogeniden von Metallen der Gruppen IIA, IIIA, IIB, IVB, VIB oder VIIIB,
c3) zu 0,01-5 Gew.-%, berechnet mit Bezug auf das Polymer (a), aus anorganischen Siliciumderivaten der lamellaren Art;
d) zu 0,01-4,5 Gew.-%, berechnet mit Bezug auf das Polymer (a), aus einem Keimbildner; und
e) zu 1-6 Gew.-%, berechnet mit Bezug auf 100 Teile der Gesamtheit von (a)-(d), aus einem oder mehreren Expandiermitteln;
wobei Formel (I) wie folgt ist: 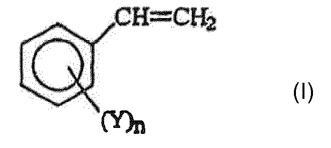 wobei n null oder eine ganze Zahl im Bereich von 1 bis 5 ist und Y ein Halogen wie etwa Chlor oder Brom oder ein Alkyl- oder Alkoxylrest mit von 1 bis 4 Kohlenstoffatomen ist.

2. Expandierbare Granulate aus vinylaromatischen Polymeren gemäß Anspruch 1 mit einem Gewichtsmittel der Molmasse Mw im Bereich von 50 000 bis 300 000.

3. Expandierbare Granulate aus vinylaromatischen Polymeren gemäß Anspruch 1 oder 2, wobei das Alkylstyrol in einer Menge im Bereich von 2 bis 10 Gew.-% vorhanden ist.

4. Expandierbare Granulate aus vinylaromatischen Polymeren gemäß Anspruch 1, 2 oder 3, wobei das Alkylstyrol α-Methylstyrol ist.

5. Expandierbare Granulate aus vinylaromatischen Polymeren gemäß einem der vorhergehenden Ansprüche, wobei das Carbon Black einen mittleren Durchmesser im Bereich von 10 bis 1000 nm, eine spezifische Oberfläche im Bereich von 5 bis 200 m²/g, einen Schwefelgehalt im Bereich von 0,1 bis 2000 ppm, einen Ascherückstand im Bereich von 0,001 bis 1 %, einen Verlust bei Wärme im Bereich von 0,001 bis 1 %, eine DBPA von 5-100 ml/(100 g) und eine lodzahl im Bereich von 0,01 bis 20 g/kg aufweist.

6. Expandierbare Granulate aus vinylaromatischen Polymeren gemäß einem der vorhergehenden Ansprüche, wobei die Oxide und/oder Sulfate und/oder lamellaren Dichalkogenide von Metallen der Gruppen IIA, IIIA, IIB, IVB, VIB oder VIIIB für die Gruppe IIA jene von Ca, Mg, Ba, für die Gruppe IIIA jene von Aluminium, für die Gruppe VIIIB jene von Fe, für die Gruppe VIB jene von Mo und für die Gruppe IIB bzw. IVB jene von Zink und Titan sind, und wobei die lamellaren Dichalkogenide jene von Sulfur, Selen oder Tellur sind.

7. Expandierbare Granulate aus vinylaromatischen Polymeren gemäß einem der vorhergehenden Ansprüche, wobei das anorganische Derivat von Silicium ein Produkt der Ton-, Glimmer-, Ton- und Montmorillonitgruppe mit einer mittleren Größe im Bereich von 0,5 bis 50 µm ist.

8. Expandierbare Granulate aus vinylaromatischen Polymeren gemäß einem der vorhergehenden Ansprüche, wobei der Keimbildner ausgewählt ist aus Polyethylen-, Polyamidwachsen mit einer Molmasse im Bereich von 500 bis 10 000 oder aus S-B-, S-B-S-, SIS-, SEBS-, SEP-Blockcopolymeren von sowohl der linearen als auch der verzweigten Art.

9. Expandierbare Granulate aus vinylaromatischen Polymeren gemäß einem der vorhergehenden Ansprüche, beinhaltend flammhemmende Mittel in einer Menge im Bereich von 0,1 bis 8 Gew.-% mit Bezug auf das Gesamtgewicht der resultierenden polymeren Zusammensetzung.

10. Expandierte Artikel mit einer Dichte im Bereich von 5 bis 50 g/l mit einer Wärmeleitfähigkeit im Bereich von 27 bis 50 mW/mK, erhalten nach der Expansion, bei einer Temperatur, die geringfügig höher ist als die Glasübergangstemperatur des Polymers, aus expandierbaren Granulaten aus vinylaromatischen Polymeren gemäß einem der vorhergehenden Ansprüche.

11. Ein Verfahren zur kontinuierlichen Massenherstellung von expandierbaren Granulaten aus vinylaromatischen Polymeren, das der Reihe nach die folgenden Schritte beinhaltet:
i) Mischen eines vinylaromatischen Polymers in Form von Körnchen oder bereits in dem geschmolzenen Zustand, erhalten durch Polymerisieren von 85-100 Gew.-% aus einem oder mehreren vinylaromatischen Monomeren mit der allgemeinen Formel (I) und 0-15 Gew.-% aus einem α-Alkylstyrol, wobei die Alkylgruppe von 1 bis 4 Kohlenstoffatome enthält, mit den Zusatzstoffen (b)-(d) aus Anspruch 1 in den wie oben angegebenen Mengen;
ii) Inkorporieren eines oder mehrerer Expandiermittel in die in den geschmolzenen Zustand gebrachte polymere Zusammensetzung;
iii) Granulieren der somit erhaltenen Zusammensetzung in einer Vorrichtung, die eine Form, eine Schneidkammer und ein Schneidsystem beinhaltet.

12. Verfahren gemäß Anspruch 11, wobei die expandierbaren Granulate bei einer Temperatur, die geringer als die oder gleich der Glasübergangstemperatur (Tg) oder geringfügig höher als die Tg ist, optional unter Druck, nachgeglüht werden.

13. Verfahren gemäß Anspruch 11 oder 12, wobei das vinylaromatische Polymer zu 2-10 Gew.-% ein α-Alkylstyrolmonomer beinhaltet.

14. Verfahren gemäß Anspruch 13, wobei das vinylaromatische Polymer aus einer Mischung von zwei (Co)polymeren besteht, wobei das erste zu 50-100 Gew.-% aus vinylaromatischem Monomer und zu 0-50 Gew.-% aus copolymerisierbarem Monomer und das zweite aus einem Copolymer aus vinylaromatischem Monomer und α-Alkylstyrolmonomer in einem Verhältnis, um eine Endkonzentration von α-Alkylstyrol gleich 2-10 Gew.-% zu ergeben, besteht.

15. Verfahren gemäß einem der vorhergehenden Ansprüche 11 bis 14, wobei das bereits in dem geschmolzenen Zustand befindliche vinylaromatische Polymer aus dem Schritt des Entfernens der flüchtigen Bestandteile einer Polymerisationseinrichtung herrührt.

16. Verfahren gemäß einem der vorhergehenden Ansprüche 11 bis 14, wobei das bereits in dem geschmolzenen Zustand befindliche vinylaromatische Polymer aus einem Vorschmelzschritt von bereits gebildeten polymeren Körnchen herrührt, möglicherweise bereits mit Verarbeitungsabfallprodukten und/oder mit den Zusatzstoffen (b)-(d) gemäß Anspruch 1 in den wie oben angegebenen Mengen gemischt.

## Revendications

1. Des granulés expansibles, ayant des compositions basées sur des polymères vinyl-aromatiques, constitués essentiellement :
a) de 65 à 99,8 % en poids d'un copolymère obtenu par polymérisation de 85 à 100 % en poids d'un ou de plusieurs monomères vinyl-aromatiques ayant la formule générale (I) et de 0 à 15 % en poids d'un α-alkylstyrène dans lequel le groupe alkyle contient de 1 à 4 atomes de carbone ;
b) de 0,01 à 20 % en poids, calculé par rapport au polymère (a), d'un noir de carbone ayant un diamètre moyen compris dans la gamme allant de 10 à 1 000 nm et une aire spécifique comprise dans la gamme allant de 5 à 200 m²/g ;
c1) de 0,01 à 5 % en poids, calculé par rapport au polymère (a), de graphite sélectionné parmi du graphite naturel ou synthétique ayant un diamètre moyen compris dans la gamme allant de 0,5 à 50 µm et une surface spécifique de 5 à 20 m²/g, ou du graphite expansible ;
et d'au moins l'un des additifs suivants (c2) à (c3) :
c2) de 0,01 à 5 % en poids, calculé par rapport au polymère (a), d'oxydes et/ou de sulfates et/ou de dichalcogénures lamellaires de métaux de groupes IIA, IIIA, IIB, IVB, VIB ou VIIIB,
c3) de 0,01 à 5 % en poids, calculé par rapport au polymère (a), de dérivés inorganiques de silicium du type lamellaire ;
d) de 0,01 à 4,5 % en poids, calculé par rapport au polymère (a), d'un agent de nucléation ; et
e) de 1 à 6 % en poids, calculé par rapport à 100 parties du total de (a) à (d), d'un ou de plusieurs agents d'expansion ;
où la Formule (I) est 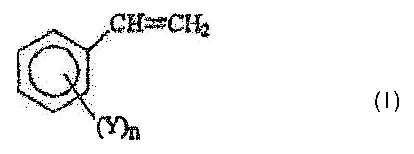 où n est zéro ou un entier compris dans la gamme allant de 1 à 5 et Y est un halogène, tel que du chlore ou du brome, ou un radical alkyle ou alcoxyle ayant de 1 à 4 atomes de carbone.

2. Les granulés expansibles de polymères vinyl-aromatiques selon la revendication 1, ayant une masse moléculaire moyenne en poids Mw comprise dans la gamme allant de 50 000 à 300 000.

3. Les granulés expansibles de polymères vinyl-aromatiques selon la revendication 1 ou la revendication 2, où l'alkylstyrène est présent dans une quantité comprise dans la gamme allant de 2 à 10 % en poids.

4. Les granulés expansibles de polymères vinyl-aromatiques selon la revendication 1, la revendication 2 ou la revendication 3, où l'alkylstyrène est de l'α-méthylstyrène.

5. Les granulés expansibles de polymères vinyl-aromatiques selon n'importe lesquelles des revendications précédentes, où le noir de carbone a un diamètre moyen compris dans la gamme allant de 10 à 1 000 nm, une surface spécifique comprise dans la gamme allant de 5 à 200 m²/g, une teneur en soufre comprise dans la gamme allant de 0,1 à 2 000 ppm, un résidu de cendres compris dans la gamme allant de 0,001 à 1 %, une perte à la chaleur comprise dans la gamme allant de 0,001 à 1 %, un DBPA allant de 5 à 100 ml/(100 g), et un indice d'iode compris dans la gamme allant de 0,01 à 20 g/kg.

6. Les granulés expansibles de polymères vinyl-aromatiques selon n'importe lesquelles des revendications précédentes, où les oxydes et/ou sulfates et/ou dichalcogénures lamellaires de métaux de groupes IIA, IIIA, IIB, IVB, VIB ou VIIIB sont ceux de Ca, Mg, Ba, pour le groupe IIA, ceux d'aluminium, pour le groupe IIIA, ceux de Fe, pour le groupe VIIIB, ceux de Mo, pour le groupe VIB, et ceux de zinc et titane pour le groupe IIB et IVB respectivement et où les dichalcogénures lamellaires sont ceux de soufre, sélénium ou tellure.

7. Les granulés expansibles de polymères vinyl-aromatiques selon n'importe lesquelles des revendications précédentes, où le dérivé inorganique de silicium est un produit du groupe des argiles, des micas, des argiles et des montmorillonites avec une taille moyenne comprise dans la gamme allant de 0,5 à 50 µm.

8. Les granulés expansibles de polymères vinyl-aromatiques selon n'importe lesquelles des revendications précédentes, où l'agent de nucléation est sélectionné parmi des cires polyamide, polyéthylène ayant une masse moléculaire comprise dans la gamme allant de 500 à 10 000 ou parmi des copolymères à blocs S-B, S-B-S, SIS, SEBS, SEP du type à la fois linéaire et ramifié.

9. Les granulés expansibles de polymères vinyl-aromatiques selon n'importe lesquelles des revendications précédentes, comprenant des agents ignifugeants dans une quantité comprise dans la gamme allant de 0,1 à 8 % en poids, par rapport au poids total de la composition polymérique résultante.

10. Des articles expansés ayant une masse volumique comprise dans la gamme allant de 5 à 50 g/l, ayant une conductivité thermique comprise dans la gamme allant de 27 à 50 mW/mK obtenus après expansion, à une température légèrement supérieure à la température de transition vitreuse du polymère, des granulés expansibles de polymères vinyl-aromatiques selon n'importe lesquelles des revendications précédentes.

11. Un procédé pour la préparation en masse continue de granulés expansibles de polymères vinyl-aromatiques qui comprend les étapes en série suivantes :
i) mélanger un polymère vinyl-aromatique sous la forme de granules ou déjà à l'état fondu, obtenu par polymérisation de 85 à 100 % en poids d'un ou de plusieurs monomères vinyl-aromatiques ayant la formule générale (I) et de 0 à 15 % en poids d'un α-alkylstyrène dans lequel le groupe alkyle contient de 1 à 4 atomes de carbone, avec les additifs (b) à (d) de la revendication 1 dans les quantités indiquées ci-dessus ;
ii) incorporer un ou plusieurs agents d'expansion dans la composition polymérique amenée à l'état fondu ;
iii) transformer en granules la composition ainsi obtenue dans un dispositif qui comprend une filière, une chambre de découpe et un système de découpe.

12. Le procédé selon la revendication 11, où les granulés expansibles sont soumis à un deuxième recuit à une température inférieure ou égale à la température de transition vitreuse (Tg), ou légèrement supérieure à la Tg, facultativement sous pression.

13. Le procédé selon la revendication 11 ou la revendication 12, où le polymère vinyl-aromatique comprend de 2 à 10 % en poids de monomère α-alkylstyrène.

14. Le procédé selon la revendication 13, où le polymère vinyl-aromatique est constitué d'un mélange de deux (co)polymères, le premier étant constitué de 50 à 100 % en poids de monomère vinyl-aromatique et de 0 à 50 % en poids de monomère copolymérisable et le deuxième d'un copolymère monomère vinyl-aromatique-monomère α-alkylstyrène, dans un rapport tel à donner une concentration finale d'α-alkylstyrène égale à de 2 à 10 % en poids.

15. Le procédé selon n'importe lesquelles des revendications 11 à 14 précédentes, où le polymère vinyl-aromatique déjà à l'état fondu provient de l'étape de dévolatilisation d'un équipement de polymérisation.

16. Le procédé selon n'importe lesquelles des revendications 11 à 14 précédentes, où le polymère vinyl-aromatique déjà à l'état fondu provient d'une étape de pré-fusion de granules polymériques déjà formés, éventuellement déjà mélangés avec des produits résiduaires de traitement et/ou avec les additifs (b) à (d) de la revendication 1 dans les quantités indiquées ci-dessus.
